# FASCICULE DE BREVET EUROPEEN

(11) **EP 1 836 651 B1**
(45) Date de publication et mention de la délivrance du brevet: **21.02.2018**
(21) Numéro de dépôt: 06700742.7
(22) Date de dépôt: 10.01.2006
(51) Int. Cl.: G06K 9/22, G06F 17/30

(54) **PROCÉDÉ DE RECHERCHE, RECONNAISSANCE ET LOCALISATION D'UN TERME DANS L'ENCRE, DISPOSITIF, PROGRAMME D'ORDINATEUR CORRESPONDANTS**
VERFAHREN ZUM SUCHEN, ERKENNEN UND LOKALISIEREN EINES TERMS IN TINTE UND DAZUGEHÖRIGE VORRICHTUNG, COMPUTER PROGRAMM
METHOD FOR SEARCHING, RECOGNIZING AND LOCATING A TERM IN INK, AND A CORRESPONDING DEVICE AND COMPUTER PROGRAM

(30) Priorité: 11.01.2005 FR 0500282; 22.02.2005 FR 0501799
(43) Date de publication de la demande: 26.09.2007
(73) Titulaire: MyScript, 44339 Nantes Cedex 3 (FR)
(72) Inventeur: LALLICAN, Pierre-Michel, F-44390 Petit Mars (FR)
(74) Mandataire: Cougard, Jean-Marie
(86) Numéro de dépôt international: PCT/EP2006/050136
(87) Numéro de publication internationale: WO 2006/075001

(56) Documents cités:
- WO-A-02/17166
- US-A- 5 265 242
- US-A1- 2005 163 377
- SENDA S ET AL: "Document image retrieval system using character candidates generated by character recognition process" DOCUMENT ANALYSIS AND RECOGNITION, 1993., PROCEEDINGS OF THE SECOND INTERNATIONAL CONFERENCE ON TSUKUBA SCIENCE CITY, JAPAN 20-22 OCT. 1993, LOS ALAMITOS, CA, USA,IEEE COMPUT. SOC, 20 octobre 1993 (1993-10-20), pages 541-546, XP010135721 ISBN: 0-8186-4960-7
- FUJISAKI T ET AL: "ONLINE RECOGNIZER FOR RUNON HANDPRINTED CHARACTERS" PROCEEDINGS OF THE INTERNATIONAL CONFERENCE ON PATTERN RECOGNITION. ATLANTIC CITY, JUNE 16 - 21, 1990. CONFERENCE A : COMPUTER VISION AND CONFERENCE B : PATTERN RECOGNITION SYSTEMS AND APPLICATIONS, LOS ALAMITOS, IEEE COMP. SOC. PRESS, US, vol. VOL. 1 CONF. 10, 16 juin 1990 (1990-06-16), pages 450-454, XP000166346 ISBN: 0-8186-2062-5

## Description

### 1. Domaine de l'invention

Le domaine de l'invention est celui de la recherche et de la reconnaissance de termes, dans des documents stockés sous forme numérique.

Notamment, l'invention concerne la recherche d'information à l'intérieur de documents, dits documents d'encre, c'est-à-dire rédigés avec une écriture manuscrite et préalablement mémorisés directement sous cette forme, dans un système d'information documentaire, par exemple. L'invention peut également s'appliquer à d'autres types de documents, et par exemple des documents dictés.

Grâce à l'accroissement important des capacités de calcul et/ou de sauvegarde des ordinateurs de bureau, mais également de tous autres types de terminaux, pour la plupart mobiles, du type assistants personnels numériques (ou PDA pour « Personal Digital Assistant » en anglais), ardoises numériques, téléphones mobiles, etc., il est devenu possible de pouvoir acquérir et mémoriser des données et/ou des documents directement dans leur forme originelle manuscrite, sans conversion préalable dans un format informatique quelconque standardisé.

Cependant, une fois de tels documents d'encre acquis et mémorisés, l'exploitation des données et/ou des informations manuscrites qu'ils contiennent nécessite la mise en oeuvre d'outils spécifiques et complexes. Ces outils permettent le plus souvent une conversion des données ou informations mémorisées en des éléments appartenant à un lexique, et une recherche à l'intérieur du ou des documents d'encre, des mots, des phrases ou des annotations convertis.

### 2. Solutions de l'art antérieur

On connaît ainsi des systèmes permettant de convertir un langage séquentiel, typiquement la voix ou de l'écriture manuscrite, en une chaîne d'éléments compréhensibles par un système informatique, lesquels sont encodés dans un format du type ASCII, ISO-Latin-1 ou UNICODE.

On connaît également parmi les systèmes de l'art antérieur, des systèmes autorisant la sauvegarde directe, par exemple sur un disque dur d'ordinateur, de documents d'encre saisie dans leur format manuscrit originel.

La recherche de données et/ou d'informations dans un ou plusieurs des documents d'encre mémorisés nécessite de pouvoir comparer les données à rechercher contenues dans la requête avec les données des documents d'encre stockées. Dans ce sens, plusieurs solutions ont été envisagées :
- comparer les données d'encre stockées avec le contenu de la requête lorsque ce dernier est également saisi de façon manuscrite ;
- comparer les données d'encre stockées avec le contenu d'une requête saisie dans un format texte (ASCII par exemple,) mais convertie en un écrit manuscrit ;
- comparer les données d'encre stockée, mais converties dans un format texte (ASCII par exemple) avec le contenu d'une requête elle-même au format texte.

Les deux premières approches sont bien sûr lourdes et consommatrices en termes de sollicitation du processeur (CPU) et de mémoire. Elles ne permettent pas un traitement efficace dans un temps raisonnable. La troisième suppose une conversion préalable en caractères, généralement à l'aide d'un lexique. Elle introduit donc un biais, puisque la conversion est limitée à une langue, et aux termes effectivement présents dans le lexique.

Une difficulté des processus de recherche réside principalement dans le fait que les données qui sont recherchées dans les documents mémorisés ne sont pas toujours de la même nature que celles utilisées dans le langage d'interrogation.

Aussi est-il important que la technique utilisée permette de faire le lien entre ces données hétérogènes, ce qui implique d'associer à la fonction de recherche, une fonction de reconnaissance des données recherchées parmi tout ou partie des documents d'encre mémorisés.

On connaît de tels systèmes de reconnaissance, qui s'appuient le plus souvent sur un traitement informatisé complexe nécessitant en contrepartie des capacités de traitement importantes, fortement consommatrices en termes de sollicitation du processeur (CPU) et de mémoire.

La plupart des systèmes de reconnaissance de l'art antérieur mettent donc en oeuvre plusieurs processus, parmi lesquels :
- une conversion des données d'encre vers un format au niveau caractère (ASCII ou autres), directement interprétable par un terminal d'ordinateur;
- une comparaison entre les données formatées en caractères et un modèle de données prenant le plus souvent la forme d'un lexique.

Un premier inconvénient de ces systèmes de reconnaissance de l'art antérieur concerne donc la nécessité d'utilisation d'un lexique au contenu souvent figé et limité en termes de quantité et de signification des mots qu'il contient.

De plus l'utilisation d'un tel lexique implique une limitation importante en termes de qualité du résultat de la recherche, ce résultat dépendant forcément de la langue du lexique, de la richesse et de l'étendue de celui-ci. Pour cette raison, les techniques de reconnaissance de l'art antérieur renvoient, au moins dans certains cas, des résultats médiocres, et ne permettent pas non plus d'effectuer une recherche sur des noms propres, sur des noms d'entreprise, ou sur toute autre chaîne de caractères ou de symboles ayant pu être écrits dans les documents d'encre considérés pour la recherche, mais non présents dans le lexique.

En outre, l'utilisation d'un lexique dans la phase de reconnaissance engendre le plus souvent des temps de réponse relativement longs dans le traitement de la requête et le rendu des résultats de la recherche à l'utilisateur.

Pour pallier l'inconvénient précité, certaines autres techniques de l'art antérieur s'appuient sur la mise en oeuvre de procédés d'indexation dont le rôle principal est l'organisation préalable des données et/ou informations contenues dans les documents d'encre à l'intérieur desquels la recherche doit être appliquée. La mise en oeuvre d'un procédé d'indexation dans un contexte de recherche impose cependant en contrepartie que le contenu des documents d'encre ait préalablement fait l'objet d'une reconnaissance au moins partielle.

Dans cet objectif, et pour réduire la durée globale de la recherche, certaines techniques proposent d'effectuer une reconnaissance préalable du contenu des documents d'encre mémorisés, puis de stocker le résultat de cette reconnaissance, par exemple sur un disque dur d'un ordinateur ou d'un serveur, et enfin, de lancer la recherche, non plus sur le contenu originel des documents d'encre mémorisés, mais sur le résultat de la reconnaissance préalablement effectuée, comme dans le document de brevet américain n°: US 2003/101163. Un autre technique connu est décrit dans SENDA S ET AL: "Document image retrieval system using character candidates generated by character recognition process",DOCUMENT ANALYSIS AND RECOGNITION, 1993., PROCEEDINGS OF THE SECOND INTERNATIONAL CONFERENCE ON TSUKUBA SCIENCE CITY, JAPAN 20-22 OCT. 1993, LOS ALAMITOS, CA, USA,IEEE COMPUT. SOC, 20 octobre 1993, pages 541-546, ISBN: 0-8186-4960-7. Dans ces techniques connues, l'indexation se fait exclusivement au niveau du mot, et un score de confiance est affecté à chaque mot pour évaluer la probabilité qu'un mot recherché corresponde ou non à un des mots indexés.

Bien qu'améliorant les temps de réponse du traitement de la recherche et/ou du processus de reconnaissance, ces techniques de l'art antérieur s'avèrent relativement décevantes en termes de qualité de la reconnaissance. Elles sont en outre extrêmement limitées en termes de capacités de recherche. A titre d'exemple, il est en effet impossible avec ces techniques de rechercher des mots qui ne seraient pas renseignés dans le lexique ayant servi à la reconnaissance des documents préalablement mémorisés. Il en est de même pour la recherche des acronymes, des marques, des noms propres et de toutes autres abréviations ou chaînes de caractères et/ou de symboles non préalablement définis dans le lexique.

L'intérêt de ces techniques connues de l'art antérieur est donc fortement limité à la recherche dans des documents préalablement mémorisés et lexicographiés, ce qui va à l'encontre d'une utilisation naturelle et étendue des systèmes de recherche et de reconnaissance dans des documents d'encre, par exemple dans le cadre de l'interrogation d'une base de données de documents d'entreprise, d'un système documentaire, etc.

Enfin, un autre inconvénient de ces systèmes de recherche et de reconnaissance concerne leur incapacité, du fait de l'approche lexicale qu'ils imposent, à pallier une altération du contenu d'un document qui aurait pu survenir au moment de la mémorisation de celui-ci, ou bien encore à palier une erreur et/ou une approximation de la saisie de la requête effectuée par un utilisateur. En effet, dès lors qu'un utilisateur saisira dans sa requête un mot présentant une erreur d'orthographe, ou une erreur de frappe, le système de recherche et de reconnaissance ne renverra aucun résultat, alors qu'il pourrait retourner un résultat proche.

De façon résumée, les techniques de recherche et/ou de reconnaissance connues de l'art antérieur présentent essentiellement cinq types d'inconvénients :
1. des problèmes liés à la segmentation en mot des documents d'encre dont l'utilisation est susceptible de provoquer des erreurs durant la phase de recherche.
2. des problèmes liés au manque de richesse du fichier d'indexation, du à la conversion des données en des éléments appartenant à un lexique, pouvant provoquer des situations dans lesquelles une requête de recherche d'un utilisateur ne puisse être reconnue, par exemple en raison d'erreur d'orthographe ou de frappe, en raison d'une saisie de noms propres ou d'entreprises, ou d'acronymes ;
3. des problèmes propres à la reconnaissance des documents d'encre a été mal réalisée, ayant pour conséquence la création d'un fichier d'indexation erroné dont l'utilisation est susceptible de provoquer des erreurs dans la phase de recherche des mots mal reconnus.
4. des problèmes liés à la requête de l'utilisateur, qui ne permet pas de s'affranchir de la contrainte linguistique, mais qui au contraire, doit être saisie dans la même langue que celle du lexique. De ce fait, toute recherche lancée sur la base d'une requête utilisateur ne respectant pas les mêmes contraintes linguistiques que celles du fichier d'indexation ne pourra pas être traitée par le système de reconnaissance. Ce dernier problème constitue probablement l'une des principales entraves à une utilisation plus naturelle et étendue des systèmes de recherche et de reconnaissance dans des documents d'encre ;
5. des problèmes liés à l'impossibilité de pouvoir réaliser des recherches avancées sur la base d'une requête saisie dans un langage de plus haut niveau, du type expression régulière, par exemple, dans le but de formaliser plus amplement le contenu de la requête à partir de laquelle le traitement de la recherche pourra s'effectuer plus rapidement, tout en délivrant à l'utilisateur une plus grande qualité au niveau des résultats retournés.

Par ailleurs, il est à noter que les inconvénients listés ci-dessus s'appliquent pour la plupart de façon similaire à la reconnaissance vocale. Dans ce dernier cas, un « terme » peut également correspondre à un son, une syllabe...

### 3. Définitions préliminaires

Dans la suite de ce document, la terminologie suivante devra être considérée avec le sens défini ci-dessous :
- Caractère : par caractère, on entend une lettre, chiffre, signe de ponctuation ou espace utilisé dans la composition littéraire un signe d'écriture unitaire (au sens d'un caractère ou symbole ASCII, par exemple).
- Terme : par terme on entend n'importe quelle suite ou chaîne contenant au moins un caractère et/ou symbole manuscrit ou de texte dactylographié, pourvu ou dépourvu d'un sens particulier.
- Segment d'encre : on définit par segment d'encre une partie du tracé d'un caractère délimitée par deux points de segmentation voisins consécutifs disposés sur le tracé dudit caractère (203 à 206).
- Unité de reconnaissance : on la définit comme l'élément de plus bas niveau sur lequel pourra s'effectuer une recherche. Dans le cadre de la présente description, l'unité de reconnaissance ainsi considérée est le caractère. Il est bien entendu que le niveau de granularité considéré pour une unité de reconnaissance peut être choisi de façon différente.
- Graphe de segmentation : graphe formé d'une pluralité de noeuds contenant chacun au moins un segment d'encre susceptible d'appartenir à un donné. Chaque noeud du graphe peut être relié en amont et/ou en aval à d'autres noeuds du graphe de segmentation, de façon que soient établies les éventuelles relations d'ascendance et/ou de descendance entre les segments d'encre contenus dans chacun des noeuds reliés entre eux.
- Hypothèse de caractère : on la définit comme l'ensemble des segments d'encre associés à un noeud du graphe de segmentation (209).
- Candidat de caractère : on le définit comme l'hypothèse de correspondance entre un ensemble de segment d'encre associé à un noeud du graphe de segmentation et un caractère (211).

### 4. Objectifs de l'invention

L'invention a notamment pour objectif de pallier ces inconvénients de l'art antérieur.

Plus précisément, un objectif de l'invention est de fournir une technique de recherche et de reconnaissance de termes, notamment mais non exclusivement, à l'intérieur de documents d'encre, qui soit rapide en temps d'exécution sur un ordinateur et/ou sur tout autre terminal fixe ou mobile.

Un autre objectif de l'invention est de fournir une telle technique qui permette d'accroître sensiblement les possibilités de recherche et de reconnaissance de toute suite de termes, selon la définition précédente, que celle-ci soit pourvue ou dépourvue de sens.

Un objectif supplémentaire de l'invention est de fournir une telle technique qui permette de s'affranchir de l'utilisation d'un lexique au contenu limité.

Un autre objectif de l'invention est de fournir une telle technique qui soit indépendante de toute contrainte linguistique.

Encore un autre objectif de l'invention est, bien sûr, de fournir une telle technique qui assure de très bons résultats de recherche et/ou de reconnaissance, même en présence d'erreurs potentielles à l'intérieur des documents d'encre mémorisés, ou bien lors de la saisie du contenu de la requête de recherche par un utilisateur.

L'invention a également pour objectif de fournir une telle technique qui soit simple et de coût raisonnable en termes d'implémentation.

### 5. Caractéristiques essentielles de l'invention

Ces objectifs, ainsi que d'autres qui apparaîtront par la suite, sont atteints à l'aide d'un procédé de recherche d'au moins un terme, formé d'au moins un caractère, dans au moins un ensemble de données d'encre, un dispositif de recherche et un programme d'ordinateur correspondants selon les revendications attachées. Selon l'invention, un tel procédé comprend avantageusement une opération de conversion des données d'encre en des données intermédiaires, dans un format intermédiaire, sous la forme d'au moins un graphe de segmentation, chaque noeud d'un des graphes comprenant au moins un segment d'encre associé à au moins un candidat de caractère, et une opération de recherche du ou des termes, effectuée sur les données intermédiaires, l'opération de conversion étant effectuée une fois pour toute lors du stockage d'un des ensembles de données et l'opération de recherche pouvant être effectuée à tout moment.

Avantageusement, l'opération de conversion comprend les étapes suivantes :
- découpage de l'ensemble en au moins un segment d'encre, chacun des segments étant délimité par deux points de segmentation voisins consécutifs ;
- construction d'un graphe de segmentation formé de noeuds reliés par des branches, chaque noeud du graphe comprenant au moins un des segments d'encre et chaque branche du graphe reliant un premier noeud à un deuxième noeud pour définir une relation d'adjacence entre au moins un segment contenu dans le premier noeud et au moins un segment contenu dans le deuxième noeud ;
- association à chacun des noeuds d'au moins un caractère prédéterminée (candidat de caractère) ;
- association d'au moins un score de confiance à chacun des candidats de caractère ;
- classification des candidats de caractère en fonction des scores de confiance. L'opération de recherche selon l'invention comprend les étapes suivantes:
   - obtention d'une requête d'entrée comprenant le terme à rechercher ;
   - conversion du contenu de la requête d'entrée en au moins un automate de requête adapté au format intermédiaire ;
   - recherche d'au moins une correspondance entre ledit terme et au moins un élément desdites données intermédiaires ; et préférentiellement:
      - présentation et/ou transmission d'au moins un résultat de la recherche.

De façon préférentielle, le score de confiance associé à un candidat de caractère est mémorisé dans ledit noeud correspondant dudit graphe.

De façon également préférentielle, l'opération de conversion comprend une opération préalable de normalisation du tracé des caractères formant les données d'encre brutes, par contrôle et/ou correction d'au moins un des paramètres appartenant au groupe comprenant :
- une valeur d'inclinaison, relativement à au moins une direction de référence;
- un coefficient de rotation, relativement à au moins un axe donné;
- une épaisseur du trait;
- une hauteur et/ou une largeur du caractère relativement à au moins deux lignes de référence,
de façon à fournir un ensemble de données d'encre normalisé.

Avantageusement, l'étape de conversion comprend une étape d'élagage des branches du graphe de segmentation dont les noeuds contiennent des candidats de caractère possédant un score de confiance faible.

De façon également avantageuse, l'étape de classification présente, pour chaque noeud du graphe de segmentation, une liste des candidats de caractère prédéterminé par ordre de score de confiance décroissant.

Préférentiellement, l'étape de classification met en oeuvre un filtrage des candidats de caractère les plus probables, par comparaison des scores de confiance avec un seuil de valeur prédéterminé.

De façon préférentielle, l'opération de classification s'appuie sur au moins une des techniques suivantes d'apprentissage, à base de :
- réseaux de neurones de Kohonen;
- machine à vecteurs de support;
- méthodes à noyau;
- systèmes de logique floue;
- modèles de Markov caché;
- réseaux de neurones.

Avantageusement, l'opération de conversion comprend une étape de mémorisation et assure le stockage d'au moins certaines des informations suivantes:
- un ensemble des noeuds;
- une liste des candidats de caractère de chacun des noeuds;
- un score de confiance pour chacun des candidats de caractère de chacun des noeuds ;
- une localisation de chacun des noeuds dans l'ensemble de données d'encre brutes stockées, la localisation étant définie par au moins un point de segmentation ;
- des informations relatives au fait qu'un noeud est adjacent à un espace séparant deux segments d'encre.

Préférentiellement, les points de segmentation sont déterminés suivants au moins un des critères appartenant au groupe comprenant :
- un extrema et/ou un minima déterminé relativement à des lignes de références;
- un point d'inflexion;
- un début de pente croissante;
- un début de pente décroissante;
- un point d'arrêt dû à une surélévation du moyen d'écriture;
- un point d'apposition du moyen d'écriture;
- des croisements de traits.

De façon également avantageuse, le terme recherché appartient au groupe comprenant au moins un caractère dactylographié ou de texte manuscrit.

Préférentiellement, l'automate de requête est du type appartenant au groupe comprenant au moins un automate à états finis.

De façon avantageuse, l'étape de conversion en au moins un automate comprend au moins :
- une étape de découpage du contenu de la requête en unités de reconnaissance appartenant au groupe comprenant au moins :
   ∘ les syllabes;
   ∘ les phonèmes;
   ∘ les graphèmes;
   ∘ les caractères ;
- une étape de mémorisation de chacune des unités de reconnaissance dans un état de l'automate de requête,
Dans le mode de réalisation préféré, l'unité de reconnaissance choisie sera un caractère.

Chaque état de l'automate de requête contient alors un caractère de la requête d'entrée et chaque branche de l'automate de requête relie un premier état avec un deuxième état définissant une relation d'ascendance/descendance entre les unités de reconnaissance contenues dans les premier et deuxième états.

Avantageusement, l'opération de recherche comprend une mise en correspondance de chacun des caractères contenus dans chacun des états de l'automate de requête avec au moins un noeud du graphe, de façon à identifier les noeuds du graphe possédant la plus forte probabilité de correspondance avec le caractère.

De façon également avantageuse, durant l'opération de recherche, on progresse simultanément dans le graphe et dans l'automate de requête, de façon que lorsqu'une mise en correspondance entre un premier noeud du graphe de segmentation et un premier caractère contenu dans un premier état de l'automate de requête a pu être réalisée, on sélectionne un deuxième état descendant directement du premier état de l'automate de requête et on détermine dans le graphe un noeud descendant directement du premier noeud et possédant la plus forte probabilité de correspondance avec le deuxième caractère.

Préférentiellement, la mise en correspondance entre le graphe de segmentation et l'automate de requête utilise un treillis à maximum de vraisemblance, comprenant en abscisse le graphe à partir des segments d'encre, et en ordonnée l'automate de requête.

On détermine ainsi de façon avantageuse, le coût d'un chemin du graphe et de l'automate à états à coût minimum en calculant la somme des scores de confiance affectés aux noeuds du graphe et aux arcs de transition entre les états de l'automate.

De façon préférentielle, l'étape de présentation et/ou de transmission d'au moins un résultat de la recherche retourne en outre une information d'identification des ensembles de données d'encre contenant au moins une occurrence du terme recherché et/ou une information de localisation de chacune des occurrences à l'intérieur de ces ensembles de données d'encre

L'invention concerne également de façon avantageuse un programme d'ordinateur selon la revendication 20 des instructions de code de programme pour l'exécution des étapes du procédé de recherche précité selon l'une quelconque des revendications 1 à 19 d'au moins un terme dans un ensemble de données d'encre brutes, le terme se présentant sous la forme d'un signal d'entrée d'une requête saisie par un utilisateur, lorsque le programme est exécuté sur un ordinateur.

L'invention concerne également de façon préférentielle, un dispositif de recherche d'au moins un terme, formé d'au moins un caractère, dans au moins un ensemble de données d'encre selon la revendication 22. Un tel dispositif selon l'invention comprend avantageusement des moyens de recherche du ou des termes, effectuée sur des données intermédiaires, préalablement stockées dans des moyens de stockage par des moyens de conversion des données d'encre en des données intermédiaires, dans un format intermédiaire, sous la forme d'au moins un graphe de segmentation, chaque noeud d'un des graphes comprenant au moins un segment d'encre associé à au moins un candidat de caractère.

De façon encore avantageuse, le dispositif selon l'invention appartient au groupe comprenant au moins :
- un ordinateur de bureau ou portable;
- un assistant digital numérique;
- une ardoise électronique;
- un terminal de télécommunication mobile;
- une borne multimédia;
- un stylo numérique.

L'invention concerne également un dispositif de conversion de données d'encre en vue de recherches d'au moins un terme, formé d'au moins un caractère, dans au moins un ensemble de données d'encre. Selon l'invention, un tel dispositif de conversion comprend préférentiellement des moyens de conversion des données d'encre en des données intermédiaires, dans un format intermédiaire, sous la forme d'au moins un graphe de segmentation, chaque noeud d'un des graphes comprenant au moins un segment d'encre associé à au moins une hypothèse de correspondance avec une unité de reconnaissance, de façon que les recherches du ou des termes soient effectuées sur les données intermédiaires. La conversion est effectuée une fois pour toute lors du stockage d'un des ensembles de données et la recherche peut être effectuée à tout moment.

L'invention concerne enfin et de façon avantageuse, un langage d'expression régulière pour la formulation d'une requête de recherche parmi un ensemble de documents d'encre mémorisés dans un format de données intermédiaire. Selon l'invention, un tel langage est convertible sous la forme d'un automate de requête pouvant être directement exploité durant l'exécution des étapes du procédé de recherche d'au moins un terme dans un ensemble de données d'encre, selon les étapes du procédé précité, lorsque le programme est exécuté sur un ordinateur.

### 6. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 donne un organigramme des différentes étapes du procédé de recherche selon l'invention, et précise en outre au niveau de quels composants du dispositif correspondant ces différentes étapes sont exécutées;
- la figure 2 illustre les différentes étapes mises en oeuvre par l'opération de conversion desdites données d'encre en des données intermédiaires, dans un format intermédiaire ;
- la figure 3 décrit le principe du treillis à maximum de vraisemblance utilisé par lors de la mise en correspondance entre le graphe de segmentation et l'automate de la requête;
- la figure 4 présente une représentation de l'automate de requête selon l'invention
- la figure 5 donne un exemple de représentation de l'automate obtenu pour une requête du type « CALIFORNIA » et « SAN FRANCISCO ».

### 7. Description d'un mode de réalisation de l'invention

Le mode de réalisation décrit ci-après concerne la recherche de termes dans des documents d'encre.

Le principe de l'invention repose donc sur une approche nouvelle et inventive de la recherche et/ou la reconnaissance d'écriture (et plus généralement de termes), laquelle utilise une opération de conversion des données d'encre dans lesquelles doit s'effectuer la recherche en des données intermédiaires, dans un format intermédiaire, sous la forme d'au moins un graphe de segmentation.

Chaque noeud d'un des graphes comprend au moins un segment d'encre extrait des données d'encre associé à au moins un candidat de caractère. Selon l'invention, l'opération de recherche et/ou de reconnaissance du ou des termes ne s'effectue plus sur les données d'origine, mais dynamiquement à partir des données intermédiaires. L'opération de conversion est effectuée une fois pour toute au moment du stockage d'un des ensembles de données et l'opération de recherche peut ainsi s'effectuer à tout moment. Bien sûr, si le document est modifié, une nouvelle conversion (et un nouveau stockage) doit être effectuée.

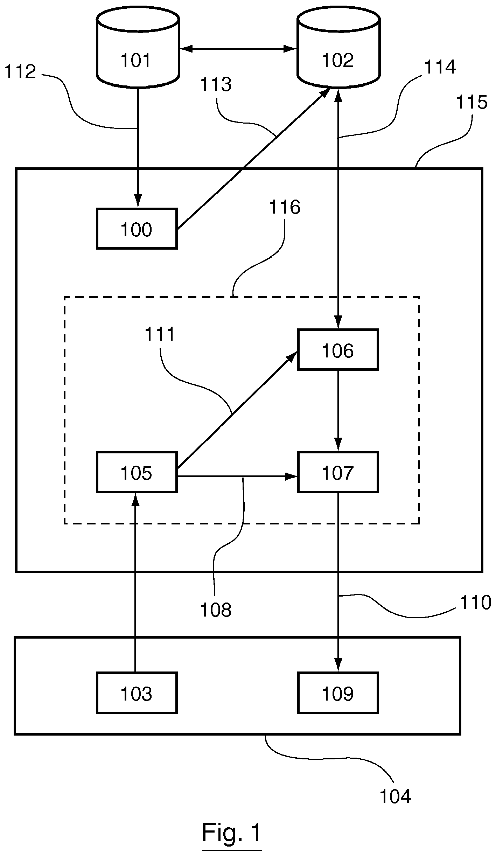

Comme illustré sur la figure 1, le procédé de recherche et/ou de reconnaissance selon l'invention comprend, dans ce mode de réalisation préféré, les étapes suivantes :
*A. une fois pour toutes :*
   - une conversion (100) préalable des documents ou données d'encre (101) dans lesquels devront s'effectuer la recherche et la reconnaissance d'écriture, dans un format intermédiaire mémorisé (102), par exemple dans un système de base de données. La conversion prend en entrée (112) les documents ou données originelles (101) pour les traiter et les convertir (113) dans le fichier de format intermédiaire (102) ;
   - et le stockage du fichier de format intermédiaire ;
*B.* *pour chaque recherche et*/*ou reconnaissance :*
   - la saisie d'une requête utilisateur (103) à partir d'une interface (104) de saisie ;
   - la conversion (105) de cette requête utilisateur sous la forme d'un automate de requête directement exploité (111) pour l'exécution de l'étape (106) de recherche et/ou de reconnaissance (114) à l'intérieur des documents et/ou des données d'encre converties et mémorisées (102) ;
   - la mise en forme (107) du résultat de la recherche et/ou de la reconnaissance, ce dernier étant directement influencé ou orienté (108) par le contenu de la requête convertie (105) ;
   - la présentation (110) du ou des résultats (109) à l'utilisateur, soit directement sous la forme d'une liste de termes recherchés et reconnus dans les documents d'encre mémorisés, soit sous la forme d'une localisation et d'une mise en évidence d'une ou plusieurs occurrences des termes recherchés.

Ces différentes étapes peuvent être mise en oeuvre et/ou exécutées par un programme d'ordinateur (115) intégrant pour son fonctionnement un moteur de recherche et/ou de reconnaissance dont le rôle consiste principalement, mais non exclusivement d'une part en l'exécution de l'étape de conversion (105) de la requête saisie par l'utilisateur sous la forme d'un automate de requête, et d'autre part en l'exécution de l'étape (106) de recherche et/ou de reconnaissance (114) à l'intérieur des documents et/ou des données d'encre converties et mémorisées (102).

C'est également au niveau du moteur de recherche (116) que pourra s'exécuter le traitement (107) des résultats (109) obtenus pour la recherche et/ou la reconnaissance d'écriture, avant que ces derniers ne soient présentés à l'utilisateur via l'interface utilisateur (104).

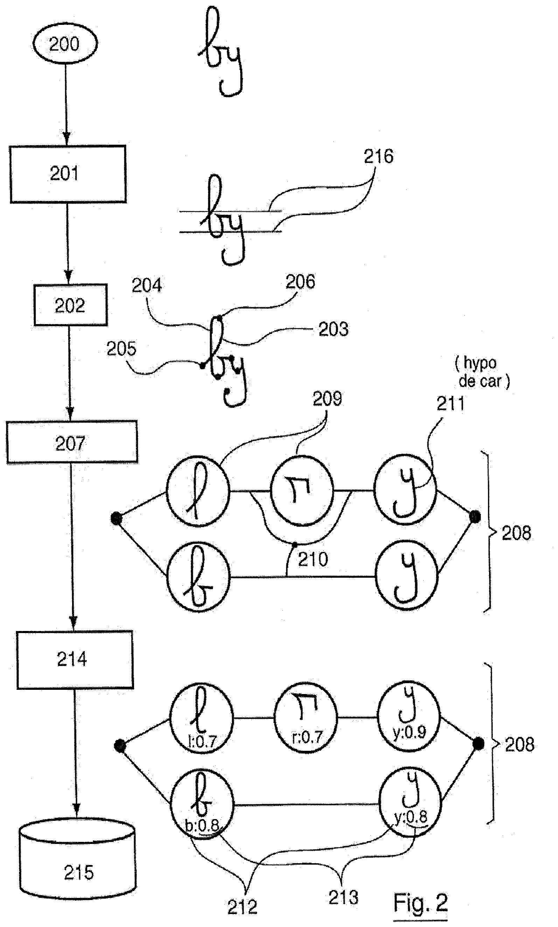

Dans ce mode de réalisation préféré de l'invention, l'étape (100) de conversion des documents d'encre (101) dans un format intermédiaire (102), mémorisés sous la forme d'au moins un graphe de segmentation comprend elle-même un ensemble prédéterminé d'opérations à exécuter, comme illustré sur la figure 2 :
- le découpage (202) de l'ensemble des données d'encre en au moins un segment d'encre (203, 204) d'encre dans ledit ensemble de données d'encre (200), chacun desdits segments (203, 204) étant délimité par deux points (205, 206) de segmentation voisins consécutifs ;
- la construction (207) d'un graphe (208) de segmentation formé de noeuds (209) reliés par des branches (210). Chaque noeud (209) du graphe (208) comprend au moins un des segments (203, 204) d'encre produits et chacune de ses branches (210) reliant un premier noeud (209) à un deuxième noeud (209) définit une relation d'adjacence entre au moins un segment contenu dans le premier noeud et au moins un segment contenu dans le deuxième noeud, de façon à former au moins une séquence (208) de segments. On rappelle, conformément à la définition du paragraphe ici que dans un mode de réalisation préférée de l'invention une hypothèse de caractère définit un ensemble de segments d'encre associés à un noeud du graphe de segmentation ;
- l'association (211) à chacun des noeuds (205, 206) d'au moins un candidat de caractère (212) prédéterminé et d'au moins un score (213) de confiance à chacune desdites hypothèses (205, 206). En outre, on précise qu'en pratique, un score de confiance au sens de l'invention indique une probabilité qu'un segment d'encre, ou que la combinaison de plusieurs segments d'encre, corresponde effectivement à un caractère prédéterminé.

On rappelle également ici que dans ce mode de réalisation préférée de l'invention, une unité de reconnaissance correspond à un caractère, et l'hypothèse de correspondance avec un caractère correspond à un candidat de caractère (Cf. définitions au paragraphe 3).
- la classification (214) des hypothèses de correspondance (212) en fonction des scores (213) de confiance associés.

Cette étape de conversion détaillée sur la figure 2 aboutit donc à la génération d'un fichier ou d'une base de données (215) contenant l'ensemble des graphes de segmentation sur lesquels pourra s'appuyer la recherche.

L'un des principaux intérêts de cette étape de conversion des données ou des documents d'encre consiste à permettre l'enrichissement de ces dernières avec des informations issues de leur traitement préalable, basé sur un processus de reconnaissance de l'écriture.

Un autre avantage de cette approche selon l'invention concerne la possibilité qu'elle offre de n'avoir à effectuer qu'une reconnaissance partielle sur les documents d'encre convertis. Cette reconnaissance partielle s'oppose à une reconnaissance complète qui doit prendre en compte des éléments linguistiques (lexique, modèle de langage) pour la reconnaissance des caractères, en appréciant la vraisemblance d'un caractère au regard du contexte (autres caractères et/ou mots voisins). Au contraire, l'approche proposée dans le cadre de la présente invention permet de s'affranchir complètement de toute contrainte lexicale et linguistique. Elle permet en outre de réaliser un maximum de traitements en amont de la phase de recherche et de reconnaissance, dans l'objectif de gagner en temps de calcul lors de la recherche et donc en temps de réponse pour le rendu des résultats de la recherche à l'utilisateur, celui-ci devant être le plus faible possible, c'est-à-dire de l'ordre de quelques centaines de millisecondes à deux ou trois secondes au maximum.

Cette approche permet enfin de favoriser une recherche rapide sur des données ou des documents non encore préalablement reconnus.

Pour réaliser cette étape de conversion des données ou documents d'encre originels (101), une première opération de découpage (202) en une pluralité de segments pour chacun des caractères contenus dans ces données ou documents est réalisée.

Une telle étape de découpage peut s'effectuer à différents niveaux : par exemple une phrase en mots, un mot en caractères et un caractère en segments d'encre. Il peut également différer en fonction du style de l'écriture à analyser (écriture cursive, majuscule ou caractère isolé).

Dans un mode de réalisation préféré de la présente invention, le découpage s'effectue au niveau des caractères. Il s'agit alors d'effectuer une segmentation directement au niveau des caractères. Il est important de souligner cependant que cela ne signifie pas pour autant que la segmentation sera nécessairement sur les caractères considérés de façon unitaire, ce qui imposerait, bien qu'il existe des techniques pour cela, une étape supplémentaire et coûteuse de détection préalable dans l'écriture texte ou manuscrite de caractères indépendant.

Au contraire, dans l'approche préconisée ici, la segmentation pourra s'effectuer aussi bien sur les caractères, que sur une partie des caractères, ou bien encore sur tout ou partie d'un ensemble de caractères reliés entre eux. Ce qui importe, c'est que le moteur (116) de recherche et/ou de reconnaissance puisse définir un certain nombre de points de segmentation (« segmentation cuts » en anglais), lesquels doivent servir de base pour former des hypothèses de caractères sur les segments ou les combinaisons des segments ainsi déterminés.

Pour réaliser cette étape (202) de découpage ou segmentation des données ou documents (101) d'encre sur lesquels la recherche et la reconnaissance devront s'appuyer, plusieurs types de critères peuvent être considérés. On cite à titre d'exemple illustratif et non limitatif les critères suivants :
- détermination d'extrema et de minima dans l'écriture manuscrite, relativement à un axe vertical ;
- détection de points de forte courbure ou de points d'inflexion au niveau des caractères ou ensembles de caractères manuscrits ;
- détection d'un début de pente croissante ;
- détection d'un début de pente décroissante ;
- détection d'un point d'arrêt dû à une surélévation du moyen d'écriture ;
- détection d'un point d'apposition du moyen d'écriture ;
- détection de croisement(s).

Le résultat de cette première opération de découpage conduit à la génération d'un ensemble de segments d'encre qui seront utilisés pour la détermination des hypothèses de caractères, chaque segment d'encre ainsi déterminé étant délimité par deux points de segmentation voisins consécutifs.

Si nécessaire, dans une variante du mode de réalisation préféré de l'invention, et suivant le niveau de qualité requis pour le résultat de la recherche et de la reconnaissance, un pré-traitement (201) pourra être appliqué à l'encre de façon à la normaliser et ainsi la rendre invariable et indépendante du style d'écriture initial.

Cette normalisation (201) peut s'effectuer aussi bien en jouant sur l'inclinaison du tracé de l'écriture manuscrite (« slant correction » en anglais) relativement à un référentiel sensiblement vertical, sur la rotation de l'écriture relativement à un axe de rotation, sur la hauteur de l'écriture, celle-ci pouvant être ramenée entre des lignes (216) de référence séparées d'une distance prédéterminée. Il est clair que cette étape (201) de normalisation pourra s'appuyer sur tous autres critères de normalisation non listé ici.

De plus, l'étape (207) de construction du graphe de segmentation, aura pour rôle principal d'associer ou de regrouper les segments d'encre, sous la forme de séquences de segments d'encre, dans le but de déterminer des hypothèses de caractère correspondantes.

Dans l'exécution de cette étape (207), on fera une estimation de la probabilité (213) pour qu'un segment d'encre puisse être un caractère donné (212), l'ensemble formé par ladite probabilité (213) et ledit caractère donné (212) formant un candidat de caractère (211). Puis on répétera l'opération pour ce même segment en lui associant le segment qui le succède directement, dans le but d'optimiser le ou les chemins à investiguer à l'intérieur du graphe de segmentation. On définit ainsi une relation d'ascendance/descendance entre les segments d'une même séquence de caractères ainsi déterminée. On rappelle également ici et conformément aux définitions du paragraphe 3, qu'une hypothèse de caractère (211) est constituées de un à N>0 segments d'encre consécutifs, chacun des noeuds du graphe de segmentation contenant une hypothèse de caractère.

A l'issue de l'étape de construction du graphe de segmentation, on obtient ainsi l'ensemble des hypothèses de caractère (211) possibles déterminées pour les documents manuscrits à l'intérieur desquels s'effectuera la recherche.

Par ailleurs, il se peut qu'à l'issue de cette étape de construction du graphe de segmentation, certaines hypothèses de caractères (211) aient un score de confiance (213) très faible, ou tout le moins inférieur à un seuil de valeur prédéterminée, pour que les segments d'encre associées à une hypothèse de caractère (211) correspondent ou appartiennent à un caractère (212) donné.
De ce fait, il est possible au cours ou bien à l'issue de l'exécution de l'étape de création du graphe de segmentation, de réaliser un traitement supplémentaire consistant à élaguer les branches de celui-ci correspondant à des hypothèses de très faible probabilité. L'intérêt d'une telle étape supplémentaire concerne notamment l'optimisation de la recherche et de la reconnaissance dans l'encre puisque le nombres des hypothèses de caractères à tester sera moins important puisque le ou les chemins de graphe de segmentation à investiguer auront une profondeur optimisée, ce qui aura pour autre conséquence positive, une diminution sensible du temps de réponse global, sans pour autant altérer la qualité du résultat qui sera renvoyé à l'utilisateur.

Ce graphe (208) de segmentation fait ensuite l'objet d'un traitement à travers l'étape (214) de classification de caractères qui, au moyen d'un procédé (214) d'extraction de caractéristique, va calculer pour chaque hypothèse de caractère (211) correspondant à chaque noeud (209) du graphe de segmentation (208), un ensemble de scores (213) indiquant la probabilité qu'une hypothèse soit effectivement un caractère plutôt qu'un autre.

Cette étape (214) de classification pourra s'appuyer, à titre d'exemple illustratif et non limitatif, sur l'un au moins des moyens suivants :
- réseaux de neurones de Kohonen;
- machine à vecteurs de support;
- méthodes à noyau;
- systèmes de logique floue;
- modèles de Markov caché;
- réseaux de neurones.

Le résultat de cette classification de chaque hypothèse de caractère correspondant à chaque noeud peut être représenté sous la forme d'une liste des meilleurs candidats caractères (212) (ou « top-list » en anglais), ordonnés par scores de confiance (213) décroissants, chaque candidat étant en effet affecté d'un score de confiance.

Après cette étape de reconnaissance au niveau des caractères, le système de reconnaissance présente différents candidats pour chaque hypothèse de caractère. À ce stade, certains de ces candidats peuvent être rejetés ou validés, dès lors qu'ils ont un score de confiance inférieur, ou bien au contraire supérieurs à un seuil prédéterminé. Il est bien entendu que ce seuil permettant de retenir ou bien de rejeter un candidat pourra être configuré par l'utilisateur, par exemple en fonction du niveau de pertinence de la recherche et/ou de la reconnaissance qu'il souhaite obtenir en termes de résultat à sa requête.

Le résultat issu de l'exécution de ces différentes opérations (201, 202, 207, 211, 214) est stocké dans un format intermédiaire, par exemple à l'intérieur d'une base de données (215). L'intérêt majeur de la mémorisation de tout ou partie des résultats d'exécution de l'étape (100, 113) de conversion des données d'encre originelles, concerne la possibilité de pouvoir conserver un maximum d'informations sur les données d'origine, de façon à pouvoir effectuer une reconnaissance optimale en termes de qualité, avec un minimum d'erreur. A titre d'exemple non limitatif, les informations suivantes seront stockées dans la base de données ou dans le fichier (215), à l'issue de l'étape (100, 113) de conversion des documents ou données d'encre :
- un ensemble desdits noeuds;
- une liste desdits candidats de caractère de chacun desdits noeuds;
- un score de confiance pour chacun des candidats de caractère de chacun des noeuds ;
- une localisation de chacun desdits noeuds dans ledit ensemble de données d'encre brutes stockées, ladite localisation étant définie par au moins un point de segmentation ;
- des informations relatives au fait qu'un noeud est adjacent à un espace séparant deux segments d'encre.

C'est donc sur la base de ce graphe de segmentation de caractère que l'étape de recherche et de reconnaissance proprement dite sera réalisée, de façon à déterminer de façon optimale quelles sont les parties de l'encre qui correspondent au mot, à l'expression ou au terme recherché. On rappellera ici que par terme, on entend n'importe qu'elle suite ou chaîne de caractères, de symboles, éléments de ponctuations, etc., qu'elle soit ou non pourvue d'un sens particulier.

Une fois réalisée l'étape préalable (100, 113) de conversion des données ou documents d'encre dans lesquels devront s'effectuer les recherches, les requêtes utilisateur de recherche à l'intérieur de ces données ou documents d'encre peuvent être mises en oeuvre.

Il est à souligner à nouveau que l'étape de conversion est réalisée une fois pour toute au moment du stockage dans le fichier ou la base de données (215). A chaque fois qu'une modification sur ces données d'encre, ou un ajout de nouvelles données d'encre est effectué, l'étape préalable de conversion (100, 113) sera reconduite, de façon que la recherche puisse également tenir compte des données ajoutées et/ou modifiées.

Un processus d'encodage de la requête de l'utilisateur est mis en oeuvre dans le cadre de la présente invention et vise à la conversion de la requête de recherche dans un format plus facilement exploitable par le procédé selon l'invention.

Dans la description du présent mode de réalisation de l'invention, nous considérerons que la requête est saisie dans un format texte (ASCII par exemple).

Comme précédemment mentionné, la présente invention propose de décomposer le processus de reconnaissance en deux parties : une première partie consistant en la conversion des données d'encre dans un format intermédiaire se présentant sous la forme d'une graphe de segmentation, et une deuxième partie correspondant à la recherche proprement dite.

Ces deux étapes sont volontairement séparées, contrairement aux systèmes connus de l'art antérieur, dans le but de préparer en amont toutes les opérations qui seront nécessaires et communes à toutes les éventuelles requêtes ultérieures d'un utilisateur.

En effet, à chaque fois qu'une requête (103) est formée par un utilisateur, un automate de requête correspondant est généré (105). Cet automate de requête (105) à états finis jouera le rôle de modèle de langage pouvant influencer les probabilités de reconnaissance lors de la recherche.

Les informations concernant l'encre retenues lors de l'étape de conversion (112, 113) ne contenant que des hypothèses de caractères (211), avec leurs candidats caractères (212) et leurs scores (213) respectifs, l'automate de requête généré (105) servira à orienter le résultat (109) de la recherche au moment de la reconnaissance.

La recherche et la reconnaissance au sens de l'invention est donc fortement orientée par la requête (103), les hypothèses de caractères (211) étant réinterprétées selon des contraintes visant à trouver explicitement les portions d'encre répondant à la requête, à l'intérieur du fichiers des données ou des documents d'encre convertis.

La formulation de la requête sous forme d'automate de requête, permet non seulement de s'affranchir des contraintes linguistiques imposées par les lexiques classiques, mais également d'effectuer des recherches beaucoup plus avancées. Parmi les exemples d'utilisations d'automates pour effectuer des recherches avancées, on peut mentionner :
- la recherche de n'importe quelle suite de caractères (nom propre, nom d'une entreprise, un acronyme...), etc.;
- la prise en compte de la casse (majuscule/minuscule);
- l'utilisation des opérateurs logiques (booléens [and, or, not...] ou autres) ;
- la recherche d'expressions régulières.
En résumé, c'est le module de recherche (106) de la figure 1, qui en parcourant l'automate de requête, va tenter de retrouver les éléments de correspondance dans le ou les documents d'encre à l'intérieur desquels la recherche dans l'encre doit s'effectuer, via le graphe de segmentation.
Pour optimiser le fonctionnement du module de recherche (106) et améliorer la pertinence du résultats de la recherche qui sera retournée à l'utilisateur, ce dernier pourra user d'opérateurs logiques (OU, ET, ET NON, NON, etc. par exemple) à l'intérieur de sa requête.
On donne ci-dessous un exemple d'utilisation et de prise en compte de ces opérateurs logiques par le module de recherche (106) : si un utilisateur saisie dans sa requêtes les termes «CALIFORNIA *ET NON* SAN FRANSISCO », l'automate de requête va transformer la requête de l'utilisateur en « CALIFORNIA » OU « SAN FRANSISCO », de façon que le module de recherche (106) va se contenter de rechercher toutes les occurrences de chacun des deux mots recherchés.

L'automate de requête ainsi formé peut donc être assimilé à un modèle de langage permettant d'optimiser le traitement de la requête et d'améliorer la qualité de la recherche en termes de pertinence du résultat.
En particulier, lorsque la recherche doit être appliquée simultanément à plusieurs documents d'encre, l'apport du module de recherche (106) est d'autant plus important et marqué.
L'utilisation des opérateurs logiques à l'intérieur de la requête peut permettre un filtrage plus fin dans la phase de recherche, et donc l'affectation d'un score globale mieux déterminé dans l'évaluation de la pertinence d'un document relativement au contenu de la requête de l'utilisateur.
Pour déterminer le résultat rendu à l'utilisateur, le score qui est affecté à chaque document tient compte de la quantité et de la qualité des instances des termes composants la requête. Dans l'exemple mentionné ci-dessus, une occurrence positive de la chaîne « san fransisco » dans un document contenant également « california » pénalisera le score final associé audit document, comparativement à un document dans lequel seule au moins une occurrence de « california » aurait été déterminée.

Dans ce cas, l'encodage de la requête de l'utilisateur visera également à définir des filtres et des règles de classement des résultats de la recherche, lesquels pourront être activés à l'étape de compilation des résultats de la recherche, entre la fin de la recherche et la transmission des résultats à l'utilisateur.

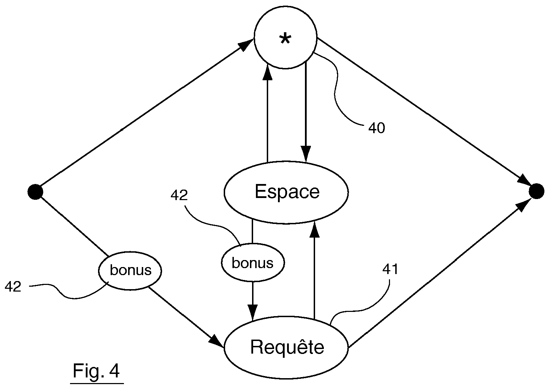

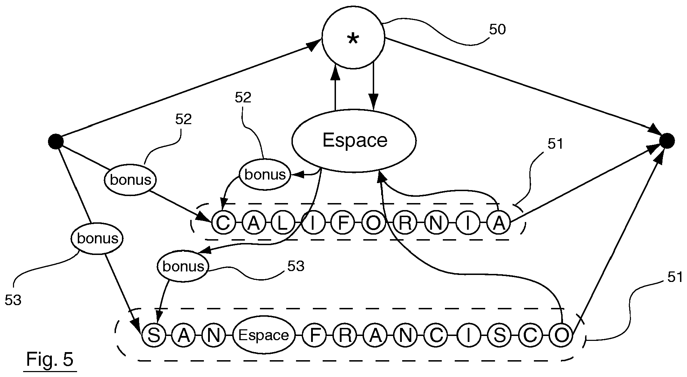

Les figures 4 et 5 illustrent un automate de requête permettant de représenter un tel langage. Dans l'optique de réaliser une recherche rapide le résultat de la reconnaissance du texte autour de la requête n'est pas pris en compte. Le modèle de langage du texte autour de la requête est approximé par la possibilité de reconnaître n'importe quelle suite de caractères, noté * (40) et (50) respectivement sur les figures 4 et 5, avant et après la requête formulée par l'utilisateur. Une telle approche permet de façon nouvelle et inventive d'améliorer sensiblement le temps de traitement et la qualité du ou des résultats rendus à l'utilisateur, comparativement à une reconnaissance classique selon les techniques connues de l'art antérieur qui s'appuient ou utilisent un lexique, souvent figé et/ou peu évolutif.

Un bonus (42, 52) doit être inséré à l'entrée de la requête de l'utilisateur pour inciter le reconnaisseur à emprunter dans l'automate, le chemin correspondant effectivement au contenu de la requête (41, 51) plutôt que celui correspondant au texte indéfini noté * (40, 50). En effet, le modèle texte permettant de reconnaître n'importe quelle suite de caractère, pourrait le cas échéant reconnaître le terme de la requête.
En ajoutant ce bonus (42, 52), on renforce l'incitation du reconnaisseur à parcourir un chemin de l'automate de requête, plutôt qu'un autre. Ce bonus (42, 52) peut être paramétré par l'utilisateur et représenté sous la forme d'un seuil de sensibilité de la détection. Plus le bonus est élevé, plus la détection de la requête sera facile, plus la qualité de la reconnaissance sera en revanche diminuée. A titre d'exemple complémentaire et non limitatif, l'ajout d'un bonus élevé aura tendance à augmenter le risque de fausse détection ou fausse acceptation. Ainsi, l'affectation d'un bonus élevé pour le terme « CALIFORNIA » pourra faire également ressortir des occurrences proche du type « CAROLINA »
A l'inverse, un bonus de valeur très faible aura pour conséquence un défaut de détection. A titre de simple exemple illustratif, un bonus initialiser à la valeur 0 (zéro) provoquera nécessairement la délivrance d'un résultat de recherche nul, puisqu'il n'y aura aucune incitation du reconnaisseur à parcourir un chemin de l'automate de requête, plutôt qu'un autre.

La recherche est donc totalement orientée par l'automate de requête qui s'apparente à un modèle de langage créé au moment de l'encodage de la requête de l'utilisateur.
De ce fait, le moteur (116) de recherche n'a pas pour objectif de reconnaître tous les éléments d'un document d'encre. Il va se limiter à rechercher les instances pour lesquelles les probabilités retenues durant la phase de conversion des données d'encre sous la forme d'un graphe de segmentation sont les plus fortes pour l'objet cherché.

Pour faciliter l'implémentation d'une telle approche, la programmation dynamique (DP pour « dynamic programming » en anglais) est utilisée. Elle permet d'effectuer dynamiquement une comparaison entre les noeuds du graphe de segmentation et ceux de l'automate de requête.

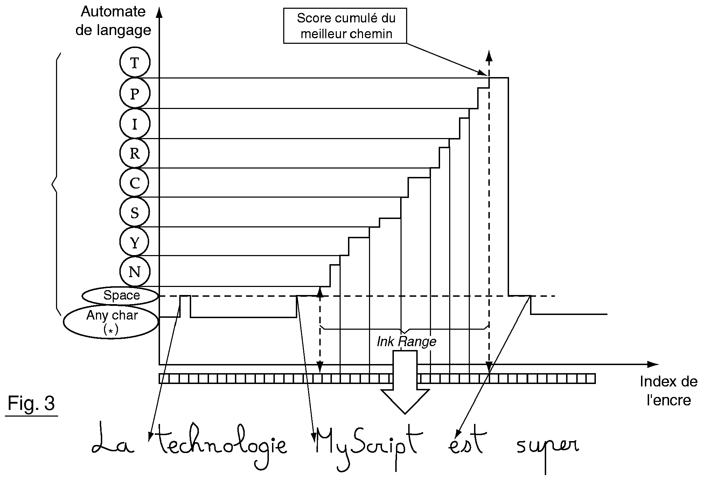

Cette comparaison dynamique consiste à rechercher le meilleur chemin à la fois dans le graphe de segmentation et dans l'automate de requête. Une représentation communément utilisée pour représenter un tel appareillement est un treillis à maximum de vraisemblance, comme illustré sur la figure 3.

Le meilleur chemin est défini comme étant le chemin ayant le coût minimal. Le coût d'un chemin est égal à la somme des coûts des noeuds qui lui sont associés dans le graphe de segmentation et éventuellement des coûts des arcs dans l'automate. Si le système de reconnaissance fournit des probabilités, on peut convertir ces probabilités en coûts par la fonction (- log).

Le meilleur chemin est affiché sur le treillis et montre à quelle partie de l'encre correspond telle partie du modèle de langage. En particulier, on est désormais capable de localiser dans l'encre stockée les occurrences du ou des termes formulés par l'utilisateur dans sa requête.

Comme illustré sur la figure 3, le treillis reçoit en abscisse le graphe de segmentation avec les informations complémentaires ajoutées lors de l'étape de conversion, et en ordonnée, l'automate de requête créé lors de l'étape d'encodage de cette dernière.

Un compilateur (107) de résultat peut également être mis en oeuvre au niveau du moteur (116) de recherche. Il a pour fonction de trier et de filtrer les résultats issus de la reconnaissance et de la recherche en fonction des informations saisies dans la requête de l'utilisateur.

A ce stade du processus, la partie recherche (ou reconnaissance d'écriture dans l'encre) est achevée. Le module de recherche (106) va fournir en sortie la localisation dans l'encre des occurrences du terme recherché ainsi qu'un score de confiance associé pour chacune de ces occurrences.

Dans l'hypothèse ou la requête de l'utilisateur est composée de plusieurs termes à rechercher, par exemple « San Franscisco » et « Californie », la recherche s'effectuera au moyen d'un seul et unique automate de requête prenant en compte les deux termes « San Franscisco » et « Californie » de la requête.

Le compilateur (107) de résultat va recevoir les données de résultat et effectuer un tri à l'aide d'un seuillage sur les scores au-delà duquel les données ne seront pas retenues. Il est également possible de faire ressortir l'ensemble des résultats en établissant un classement en fonction du score obtenu.

Plusieurs séries de scores seront fournies et combinées par le compilateur (107) de résultats dont la fonction consistera alors à faire ressortir les réponses correspondante effectivement à la requête initiale de l'utilisateur : « San Franscisco » et « Californie », par exemple.

Il est bien évident que le procédé et le dispositif selon l'invention permettent de réaliser des recherches dans l'encre d'un ou plusieurs documents manuscrits.

Lorsque la recherche s'effectue sur un seul document d'encre, le résultat de la recherche est retourné à l'utilisateur sous la forme d'une localisation des occurrences des termes recherchés sur une seule page de document. Ici la recherche est orientée sur l'objet de la requête, l'utilisateur cherchant à retrouver l'emplacement de l'encre dans un document. Un score de confiance est donc affecté à chaque occurrence.

Lorsque la recherche s'effectue sur plusieurs documents d'encre, le résultat de la recherche est retourné à l'utilisateur sous la forme d'une liste ordonnée des documents contenant le terme recherché. Ici la recherche est orientée sur le(s) document(s) dans lequel se trouve le terme recherché, avec son score. Un score de confiance est donc affecté à chaque document.

Dans tous les cas il sera possible de donner la localisation de l'objet de la recherche, en la faisant apparaître de façon significative.

En d'autres termes et de façon avantageuse, l'invention permet d'une part de résoudre les problèmes habituellement rencontrés en termes de segmentation en mot des documents d'encre dans lesquels doivent s'effectuer les recherches à partir de la reconnaissance.

L'invention permet également une segmentation dynamique des documents d'encre mémorisés, au fur et à mesure de l'exécution de chaque processus ou requête de recherche exécuté.

Une telle approche nouvelle et innovante autorise en outre de façon avantageuse et contrairement aux solutions existantes de l'art antérieur la recherche de mots non forcément reconnus, et plus généralement de toute chaîne ou séquence de caractères et/ou de symboles dépourvues ou pourvues de sens, y compris par extension, la recherche de tout type de caractères ou symboles d'écritures non latines (chinoise ou japonaise, par exemple). Ce résultat extrêmement intéressant est obtenu de part un découpage spécifique des termes contenus dans les documents d'encre mémorisés, non pas à un niveau phrase, mots ou caractères, mais uniquement à un niveau plus bas sur une partie d'au moins un caractère.

Cette approche permet en outre de s'affranchir de toute contrainte linguistique.

Cette approche selon l'invention mettant en oeuvre une segmentation dynamique des documents d'encre mémorisés peut être facilement implémentée par programmation dynamique. Elle permet en outre la prise en compte de requêtes de recherche dans les documents d'encre mémorisés qui soient beaucoup plus complexes et beaucoup plus riche, sans aucune contrainte d'utilisation d'un lexique prédéterminé, figé et non adaptatif et/ou évolutif

Elle permet dans ce sens de s'affranchir des contraintes habituellement liées à la nécessité de pouvoir distinguer entre caractères majuscules ou minuscules.

Un avantage supplémentaire concerne la possibilité de pouvoir utiliser un modèle de langage formalisé autorisant une optimisation dans la saisie et la prise en compte du contenu de la requête utilisateur, mais aussi et en contrepartie positive, une optimisation du résultat rendu, lequel s'avère souvent beaucoup plus riche et de meilleure qualité.

Il est également important de souligner qu'une telle approche selon l'invention permet de limiter considérablement les erreurs liées à la reconnaissance dans l'encre, puisque cette dernière est directement orientée par le contenu de la requête à rechercher. Cette approche est donc nouvelle et inventive en ce sens qu'elle va directement à l'encontre des techniques basiques connues de l'art antérieur pour lesquelles la reconnaissance s'effectue indépendamment du contenu de la requête.

Avantageusement, l'approche retenue dans la présente invention favorise d'une part la qualité de la reconnaissance, mais aussi la possibilité supplémentaire de pouvoir solliciter une localisation précise et efficace des termes, mots ou phrases recherchées à l'intérieur des documents d'encre mémorisés. Cette localisation peut s'effectuer par le surlignage, les transformations en lien hypertexte ou par toute autre méthode permettant d'apposer un focus sur les termes recherchés et effectivement reconnus, directement sur le contenu des documents d'encre stockés. Plusieurs focus peuvent être ainsi apposés sur le texte lorsqu'une pluralité d'instances du terme recherché a été détectée dans un ou plusieurs des documents d'encres stockés.

Une telle approche selon l'invention favorise également et sensiblement la réduction du temps de traitement d'une requête de recherche, l'étape de reconnaissance s'effectuant désormais dans un temps très limité, non gênant pour l'utilisateur.

On peut par ailleurs noter que la recherche étant disjointe du prétraitement, ces deux opérations peuvent dans certains cas être réalisées par des appareils distincts, et éventuellement distants. Notamment, le prétraitement et le stockage peuvent être assurés sur des serveurs distants, accessibles via à un réseau local ou internet. Les requêtes sont alors formées sur un terminal (ordinateur, PDA...), et traités par le serveur.

Comme déjà mentionné, l'invention ne se limite pas au mode de réalisation présenté, mais trouve des applications pour d'autres formats de données source, et notamment des données vocales, qui peuvent de la même façon être transformées dans un format intermédiaire sous la forme de graphes d'hypothèses. Le traitement est ensuite similaire.

## Revendications

1. Procédé de recherche d'au moins un terme, formé d'au moins un caractère, dans au moins un document comprenant un ensemble (101) de données d'encre, les données d'encre étant rédigées sous forme d'une écriture manuscrite et préalablement enregistrées directement sous cette forme,
**caractérisé en ce qu'**il comprend une opération de conversion (100) préalable des documents ou données (101) d'encre dans lesquels doivent s'effectuer la recherche et la reconnaissance d'écriture, en des données intermédiaires (102) mémorisées, par exemple dans un système de base de données, dans un format intermédiaire, sous la forme d'au moins un graphe de segmentation formé de noeuds reliés par des branches, chaque noeud comprenant au moins un segment d'encre associé à au moins une hypothèse de correspondance avec une unité de reconnaissance, chaque branche reliant un premier noeud à un deuxième noeud pour définir une relation d'adjacence entre au moins un segment contenu dans ledit premier noeud et au moins un segment contenu dans ledit deuxième noeud,
et une opération (105) de conversion dudit au moins un terme dans au moins un automate de requête (111) adapté au format intermédiaire pour être directement exploité pour l'exécution d'une opération (106) de recherche dudit au moins un terme, effectuée sur lesdites données intermédiaires, et d'une opération (114) de reconnaissance des données intermédiaires en utilisant ledit au moins un automate de requête en tant que modèle de langage,
ladite opération de conversion préalable étant effectuée une fois pour toute lors du stockage d'un desdits ensembles de données et ladite opération de recherche pouvant être effectuée à tout moment.

2. Procédé de recherche selon la revendication 1, **caractérisé en ce que** ladite opération de conversion comprend les étapes suivantes :
- découpage dudit ensemble en au moins un segment d'encre, chacun desdits segments étant délimité par deux points de segmentation voisins consécutifs ;
- construction dudit au moins un graphe de segmentation ;
- association à chacun des noeuds dudit au moins un graphe d'au moins une hypothèse de correspondance avec une unité de reconnaissance prédéterminée ;
- association d'au moins un score de confiance à chacune desdites hypothèses de correspondance avec une unité de reconnaissance, ledit au moins un score de confiance indiquant une probabilité que ledit au moins un segment d'encre corresponde à ladite unité de reconnaissance ;
- classification desdites hypothèses de correspondance avec une unité de reconnaissance en fonction desdits scores de confiance.

3. Procédé de recherche selon la revendication 2, **caractérisé en ce que** ladite opération de recherche comprend les étapes suivantes :
- obtention d'une requête d'entrée comprenant ledit terme à rechercher ;
- conversion du contenu de ladite requête d'entrée en ledit au moins un automate de requête adapté audit format intermédiaire ;
- recherche d'au moins une correspondance entre ledit terme et au moins un élément desdites données intermédiaires ;
- présentation et/ou transmission d'au moins un résultat de la recherche.

4. Procédé de recherche selon la revendication 3, **caractérisé en ce que** chaque score de confiance est mémorisé dans chaque noeud correspondant dudit graphe, le modèle de langage définissant au moins un chemin à travers les noeuds, et ladite opération comprenant en outre ladite reconnaissance en cherchant au moins un chemin ayant la plus grande probabilité combinée indiquée par les scores de confiances mémorisés.

5. Procédé de recherche selon l'une quelconque des revendications 1 à 4,
**caractérisé en ce que** ladite opération de conversion comprend une opération préalable de normalisation du tracé desdits caractères formant lesdites données d'encre brutes, par contrôle et/ou correction d'au moins un des paramètres appartenant au groupe comprenant :
- une valeur d'inclinaison, relativement à au moins une direction de référence;
- un coefficient de rotation, relativement à au moins un axe donné;
- une épaisseur du trait;
- une hauteur et/ou une largeur du caractère relativement à au moins deux lignes de référence,
de façon à fournir un ensemble de données d'encre normalisé.

6. Procédé de recherche selon l'une quelconque des revendications 1 à 5
**caractérisé en ce que** ladite étape de conversion comprend une étape d'élagage des branches dudit graphe de segmentation dont les noeuds contiennent les hypothèses de correspondance avec une unité de reconnaissance possédant un score de confiance faible.

7. Procédé de recherche selon l'une quelconque des revendications 2 à 6,
**caractérisé en ce que** ladite étape de classification présente, pour chaque noeud dudit graphe de segmentation, une liste desdites hypothèses de correspondance dudit noeud avec une unité de reconnaissance prédéterminée par ordre de score de confiance décroissant.

8. Procédé de recherche selon la revendication 7, **caractérisé en ce que** ladite étape de classification met en oeuvre un filtrage desdites hypothèses de correspondance les plus probables, par comparaison desdits scores de confiance avec un seuil de valeur prédéterminé.

9. Procédé de recherche selon l'une quelconque des revendications 2 à 8,
caractérisé en que ladite opération de classification s'appuie sur au moins une des techniques suivantes de classification, à base de :
- réseaux de neurones de Kohonen;
- machine à vecteurs de support;
- méthodes à noyau;
- systèmes de logique floue;
- modèles de Markov caché;
- réseaux de neurones.

10. Procédé de recherche selon l'une quelconque des revendications 1 à 9,
**caractérisé en ce que** ladite opération de conversion comprend une étape de mémorisation et assure le stockage d'au moins certaines des informations suivantes:
- un ensemble desdits noeuds;
- une liste desdites hypothèses de correspondance de chacun desdits noeuds avec au moins une unité de reconnaissance;
- un score de confiance pour chacune desdites hypothèse de correspondance avec une unité de reconnaissance, correspondant à chacun desdits noeuds ;
- une localisation de chacun desdits noeuds dans ledit ensemble de données d'encre brutes stockées, ladite localisation étant définie par au moins un point de segmentation ;
- des informations relatives au fait qu'un noeud est adjacent à un espace séparant deux segments d'encre.

11. Procédé de recherche selon l'une quelconque des revendications 2 à 10,
**caractérisé en ce que** lesdits points de segmentation sont déterminés suivants au moins un des critères appartenant au groupe comprenant :
- un extrema et/ou un minima déterminé relativement à des lignes de références;
- un point d'inflexion;
- un début de pente croissante;
- un début de pente décroissante;
- un point d'arrêt dû à une surélévation du moyen d'écriture;
- un point d'apposition du moyen d'écriture;
- des croisements de traits

12. Procédé de recherche selon l'une quelconque des revendications 1 à 11
**caractérisé en ce que** ledit terme recherché appartient au groupe comprenant au moins un caractère dactylographié ou de texte manuscrit.

13. Procédé de recherche selon l'une quelconque des revendications 3 à 12
**caractérisé en ce que** ledit automate de requête est du type appartenant au groupe comprenant au moins un automate à états finis.

14. Procédé de recherche selon l'une quelconque des revendications 3 à 12
**caractérisé en ce que** la dite étape de conversion en au moins un automate comprend au moins :
- une étape de découpage du contenu de la requête en unités de reconnaissance appartenant au groupe comprenant au moins :
- les syllabes;
- les phonèmes;
- les graphèmes;
- les caractères ;
- une étape de mémorisation de chacune desdites unités de reconnaissance dans un état dudit automate de requête,
de façon que chaque état dudit automate de requête contienne une unité de reconnaissance de ladite requête d'entrée et que chaque branche dudit automate de requête reliant un premier état avec un deuxième état définisse une relation d'ascendance/descendance entre lesdites unités de reconnaissance contenues dans lesdits premier et deuxième états.

15. Procédé de recherche selon la revendication 14, **caractérisé en ce que** ladite opération de recherche comprend une mise en correspondance de chacune desdites unités de reconnaissance contenues dans chacun desdits états dudit automate de requête avec au moins un noeud dudit graphe, de façon à identifier les noeuds dudit graphe possédant la plus forte probabilité de correspondance avec ladite unité de reconnaissance.

16. Procédé de recherche selon les revendications 14 et 15, **caractérisé en ce que** durant ladite opération de recherche, on progresse simultanément dans ledit graphe et dans ledit automate de requête,
de façon que lorsqu'une mise en correspondance entre un premier noeud dudit graphe de segmentation et une première unité de reconnaissance contenue dans un premier état dudit automate de requête a pu être réalisée, on sélectionne un deuxième état descendant directement dudit premier état dudit automate de requête et on détermine dans ledit graphe un noeud descendant directement dudit premier noeud et possédant la plus forte probabilité de correspondance avec ladite deuxième unité de reconnaissance.

17. Procédé de recherche selon la revendication 16, **caractérisé en ce que** ladite mise en correspondance entre ledit graphe de segmentation et ledit automate de requête utilise un treillis à maximum de vraisemblance, comprenant en abscisse ledit graphe à partir desdits segments d'encre, et en ordonnée ledit automate de requête.

18. Procédé de recherche selon l'une quelconque des revendications 16 et 17,
**caractérisé en ce qu'**on détermine le chemin dudit graphe et dudit automate à états à coût minimum, en calculant la somme des scores de confiance affectés auxdits noeuds dudit graphe et aux arcs de transition entre lesdits états dudit automate.

19. Procédé de recherche selon l'une quelconque des revendications 1 à 18,
**caractérisé en ce que** ladite étape de présentation et/ou transmission d'au moins un résultat de la recherche retourne en outre une information de localisation de chacune des occurrences reconnues à l'intérieur d'un desdits ensembles de données d'encre et/ou une information d'identification dudit ensemble de données d'encre.

20. Programme d'ordinateur (115) comprenant des instructions de code de programme pour l'exécution des étapes du procédé de recherche d'au moins un terme dans un ensemble de données brutes stockées en langage séquentiel, ledit terme se présentant sous la forme d'un signal d'entrée d'une requête saisie par un utilisateur, selon l'une quelconque des revendications 1 à 19 lorsque ledit programme est exécuté sur un ordinateur.

21. Programme d'ordinateur selon la revendication 20, dans lequel les instructions de code de programme comportent un langage d'expression régulière pour la formulation d'une requête de recherche pour un ensemble de documents d'encre mémorisés dans un format de données intermédiaires, **caractérisé en ce que** ledit langage comprend des instructions de conversion de ladite requête sous la forme d'un automate de requête pouvant être directement exploité durant l'exécution des étapes du procédé de recherche d'au moins un terme dans au moins un document comprenant un ensemble de données d'encre brutes.

22. Dispositif de recherche d'au moins un terme, formé d'au moins un caractère, dans au moins un document comprenant un ensemble de données d'encre, les données d'encre étant rédigées sous forme d'une écriture manuscrite et préalablement enregistrées directement sous cette forme,
**caractérisé en ce qu'**il comprend des moyens de conversion préalable des documents ou données d'encre dans lesquels doivent s'effectuer la recherche et la reconnaissance d'écriture, en des données intermédiaires mémorisées dans des moyens de stockage, dans un format intermédiaire, sous la forme d'au moins un graphe de segmentation formé de noeuds reliés par des branches, chaque noeud comprenant au moins un segment d'encre associé à au moins une hypothèse de correspondance avec une unité de reconnaissance, chaque branche reliant un premier noeud à un deuxième noeud pour définir une relation d'adjacence entre au moins un segment contenu dans ledit premier noeud et au moins un segment contenu dans ledit deuxième noeud,
des moyens de recherche dudit au moins un terme, effectuée sur les données intermédiaires, dans lequel lesdits moyens de recherche sont configurés pour rechercher ledit au moins un terme en convertissant ledit au moins un terme dans au moins un automate de requête adapté au format intermédiaire pour être directement exploité pour l'exécution de la recherche dudit au moins un terme effectuée sur les données intermédiaires, et pour réaliser une reconnaissance des données intermédiaires en utilisant ledit au moins un automate de requête en tant que modèle de langage, ladite conversion préalable étant effectuée une fois pour toute lors du stockage d'un desdits ensembles de données et ladite recherche pouvant être effectuée à tout moment.

23. Dispositif de recherche selon la revendication 22, **caractérisé en ce qu'**il appartient au groupe comprenant au moins :
- un ordinateur de bureau ou portable;
- un assistant digital numérique;
- une ardoise électronique;
- un terminal de télécommunication mobile;
- une borne multimédia;
- un stylo numérique.

## Patentansprüche

1. Verfahren zum Suchen von mindestens einem Begriff aus mindestens einem Schriftzeichen in mindestens einem Dokument, umfassend einen Satz (101) von Tintendaten, wobei die Tintendaten in Form einer Handschrift verfasst und vorab direkt in dieser Form registriert wurden,
**dadurch gekennzeichnet, dass** es eine Operation des vorherigen Konvertierens (100) der Dokumente oder Daten (101) aus Tinte, bei denen das Suchen und Erkennen der Schrift erfolgen muss, in Zwischendaten (102), die beispielsweise in einem Zwischendatenbanksystem in Form mindestens eines aus durch Zweige verbundenen Knoten gebildeten Graphen zur Segmentierung gespeichert werden, wobei jeder Knoten mindestens ein Tintensegment umfasst, das mindestens einer Hypothese der Übereinstimmung mit einer Erkennungseinheit zugeordnet ist, wobei jeder Zweig einen ersten Knoten mit einem zweiten Knoten verbindet, um eine Nachbarschaftsbeziehung zwischen mindestens einem in dem ersten Knoten enthaltenen Segment und mindestens einem in dem zweiten Knoten enthaltenen Segment zu definieren,
und eine Operation (105) des Konvertierens des mindestens einen Begriffs in mindestens einen Anfrageautomaten (111), der an das Zwischenformat angepasst ist, um direkt zur Ausführung einer Operation (106) des Suchens des mindestens einen Begriffs, die an den Zwischendaten ausgeführt wird, und einer Operation (114) des Erkennens der Zwischendaten unter Verwendung des mindestens einen Anfrageautomaten als Sprachmodell genutzt zu werden, umfasst,
wobei die Operation des vorherigen Konvertierens einmalig während des Speicherns eines der Datensätze durchgeführt wird und die Operation des Suchens jederzeit durchgeführt werden kann.

2. Verfahren zum Suchen gemäß Anspruch 1, **dadurch gekennzeichnet, dass** die Operation des Konvertierens die folgenden Schritte umfasst:
- Aufteilen des Satzes in mindestens ein Tintensegment, wobei jedes der Segmente durch zwei benachbarte aufeinanderfolgende Segmentationspunkte begrenzt wird,
- Konstruktion des mindestens einen Graphen zur Segmentierung,
- Zuordnen mindestens einer Hypothese der Übereinstimmung mit einer vorgegebenen Erkennungseinheit zu jedem der Knoten des mindestens einen Graphen,
- Zuordnen mindestens eines Konfidenzwerts zu jeder der Hypothesen der Übereinstimmung mit einer Erkennungseinheit, wobei der mindestens eine Konfidenzwert eine Wahrscheinlichkeit angibt, dass das mindestens eine Tintensegment mit der Erkennungseinheit übereinstimmt,
- Klassifizieren der Hypothesen der Übereinstimmung mit einer Erkennungseinheit entsprechend den Konfidenzwerten.

3. Verfahren zum Suchen gemäß Anspruch 2, **dadurch gekennzeichnet, dass** die Operation des Suchens die folgenden Schritte umfasst:
- Erhalten einer den zu suchenden Begriff umfassenden Eingangsanfrage,
- Konvertieren des Inhalts der Eingangsanfrage in den mindestens einen Anfrageautomaten, der an das Zwischenformat angepasst ist,
- Suchen mindestens einer Übereinstimmung zwischen dem Begriff und mindestens einem Element der Zwischendaten,
- Präsentieren und/oder Übertragen von mindestens einem Suchergebnis.

4. Verfahren zum Suchen gemäß Anspruch 3, **dadurch gekennzeichnet, dass** jeder Konfidenzwert in jedem übereinstimmenden Knoten des Graphen gespeichert wird, wobei das Sprachmodell mindestens einen Pfad durch die Knoten definiert und die Operation ferner das Erkennen durch Suchen von mindestens einem Pfad umfasst, der die größte kombinierte Wahrscheinlichkeit aufweist, die durch die gespeicherten Konfidenzwerte angezeigt wird.

5. Verfahren zum Suchen gemäß einem der Ansprüche 1 bis 4, **dadurch gekennzeichnet, dass** die Operation des Konvertierens eine vorbereitende Operation des Normierens des Verlaufs der Schriftzeichen umfasst, die die rohen Eingangsdaten bilden, durch Kontrolle und/oder Korrektur von mindestens einem der Parameter, die zu der Gruppe gehören, umfassend:
- einen Neigungswert bezüglich mindestens einer Bezugsrichtung,
- einen Rotationskoeffizienten bezüglich mindestens einer gegebenen Achse,
- eine Strichstärke,
- eine Höhe und/oder eine Länge des Schriftzeichens bezüglich mindestens zweier Bezugslinien,
so dass ein genormter Satz von Tintendaten bereitgestellt wird.

6. Verfahren zum Suchen gemäß einem der Ansprüche 1 bis 5, **dadurch gekennzeichnet, dass** der Schritt des Konvertierens einen Schritt des Auslichtens der Zweige des Graphen zur Segmentierung umfasst, deren Knoten die Hypothesen der Übereinstimmung mit einer Erkennungseinheit mit einem geringen Konfidenzwert enthalten.

7. Verfahren zum Suchen gemäß einem der Ansprüche 2 bis 6, **dadurch gekennzeichnet, dass** der Schritt des Klassifizierens für jeden Knoten des Graphen zur Segmentierung eine Liste der Hypothesen der Übereinstimmung des Knotens mit einer vorgegebenen Erkennungseinheit in absteigender Reihenfolge des Konfidenzwerts aufweist.

8. Verfahren zum Suchen gemäß Anspruch 7, **dadurch gekennzeichnet, dass** der Schritt des Klassifizierens ein Filtern der wahrscheinlichsten Hypothesen der Übereinstimmung umsetzt, indem die Konfidenzwerte mit einer vorgegebenen Wertschwelle verglichen werden.

9. Verfahren zum Suchen gemäß einem der Ansprüche 2 bis 8, **dadurch gekennzeichnet, dass** die Operation des Klassifizierens sich auf mindestens eine der folgenden Klassifizierungstechniken stützt, auf Basis von:
- neuronalen Kohonennetzen,
- Unterstützungsvektorenmaschine,
- Kernverfahren,
- Fuzzy-Systemen,
- Hidden-Markov-Modellen,
- neuronalen Netzen.

10. Verfahren zum Suchen gemäß einem der Ansprüche 1 bis 9, **dadurch gekennzeichnet, dass** die Operation des Konvertierens einen Schritt des Speicherns umfasst und die Speicherung von mindestens einigen der folgenden Informationen gewährleistet:
- eine Menge der Knoten,
- eine Liste der Hypothesen der Übereinstimmung von jedem der Knoten mit mindestens einer Erkennungseinheit,
- ein Konfidenzwert für jede der Hypothesen der Übereinstimmung mit einer Erkennungseinheit entsprechend jedem der Knoten,
- eine Lokalisierung jedes der Knoten in dem gespeicherten Satz von rohen Tintendaten, wobei die Lokalisierung durch mindestens einen Segmentationspunkt definiert wird,
- Informationen darüber, ob ein Knoten an einen Raum angrenzt, der zwei Tintensegmente separiert.

11. Verfahren zum Suchen gemäß einem der Ansprüche 2 bis 10, **dadurch gekennzeichnet, dass** die Segmentationspunkte gemäß mindestens einem der Kriterien bestimmt werden, die zu der Gruppe gehören, umfassend:
- einen Extrem- und/oder Minimalwert, der bezüglich von Bezugslinien bestimmt wird,
- einen Wendepunkt,
- einen Anfang des wachsenden Anstiegs,
- einen Anfang des abnehmenden Anstiegs,
- einen Haltepunkt infolge eines Hebens des Schreibmittels,
- einen Punkt des Aufsetzens des Schreibmittels,
- Kreuzungen von Strichen

12. Verfahren zum Suchen gemäß einem der Ansprüche 1 bis 11, **dadurch gekennzeichnet, dass** der gesuchte Begriff zu der Gruppe gehört, die mindestens ein maschinengeschriebenes Schriftzeichen oder handgeschriebenen Text umfasst.

13. Verfahren zum Suchen gemäß einem der Ansprüche 3 bis 12, **dadurch gekennzeichnet, dass** der Anfrageautomat von einem Typ ist, der zu der mindestens einen endlichen Zustandsautomaten umfassenden Gruppe gehört.

14. Verfahren zum Suchen gemäß einem der Ansprüche 3 bis 12, **dadurch gekennzeichnet, dass** der Schritt des Konvertierens in mindestens einen Automaten mindestens umfasst:
- einen Schritt des Aufteilens des Inhalts der Anfrage in Erkennungseinheiten, die zu der Gruppe gehören, umfassend zumindest:
- die Silben,
- die Phoneme,
- die Grapheme,
- die Schriftzeichen,
- einen Schritt des Speicherns einer jeden Erkennungseinheit in einen Zustand des Anfrageautomaten,
so dass jeder Zustand des Anfrageautomaten eine Erkennungseinheit der Eingangsanfrage enthält und jeder Zweig des Anfrageautomaten, der einen ersten Zustand mit einem zweiten Zustand verbindet, eine Beziehung von Aufwärts- und Abwärtsrichtungen zwischen den in dem ersten und zweiten Zustand enthaltenen Erkennungseinheiten definiert.

15. Verfahren zum Suchen gemäß Anspruch 14, **dadurch gekennzeichnet, dass** die Operation des Suchens ein Abgleichen jeder der Erkennungseinheiten, die in jedem der Zustände des Anfrageautomaten enthalten sind, mit mindestens einem Knoten des Graphen umfasst, so dass die Knoten des Graphen identifiziert werden, die die höchste Wahrscheinlichkeit einer Übereinstimmung mit der Erkennungseinheit aufweisen.

16. Verfahren zum Suchen gemäß den Ansprüchen 14 und 15, **dadurch gekennzeichnet, dass** während der Operation des Suchens gleichzeitig in dem Graphen und in dem Anfrageautomaten fortgeschritten wird,
so dass, wenn ein Abgleich zwischen einem ersten Knoten des Graphen zur Segmentierung und einer ersten Erkennungseinheit, die in einem ersten Zustand des Anfrageautomaten enthalten ist, durchgeführt werden konnte, ein zweiter Zustand gewählt wird, der direkt auf den ersten Zustand des Anfrageautomaten folgt, und in dem Graphen ein Knoten bestimmt wird, der direkt auf den ersten Knoten folgt und die höchste Wahrscheinlichkeit einer Übereinstimmung mit der zweiten Erkennungseinheit aufweist.

17. Verfahren zum Suchen gemäß Anspruch 16, **dadurch gekennzeichnet, dass** der Abgleich zwischen dem Graphen zur Segmentierung und dem Anfrageautomaten ein Maximalwahrscheinlichkeitsgitter verwendet, das auf der Abszisse den Graphen ab den Tintensegmenten und auf der Ordinate den Anfrageautomaten umfasst.

18. Verfahren zum Suchen gemäß einem der Ansprüche 16 und 17, **dadurch gekennzeichnet, dass** der Pfad des Graphen und des Automaten auf Zustände minimaler Kosten festgelegt wird, indem die Summe der Konfidenzwerte berechnet wird, die den Knoten des Graphen und den Übergangsbögen zwischen den Zuständen des Automaten zugewiesen sind.

19. Verfahren zum Suchen gemäß einem der Ansprüche 1 bis 18, **dadurch gekennzeichnet, dass** der Schritt des Präsentierens und/oder Übertragens von mindestens einem Suchergebnis ferner eine Information der Lokalisierung jedes der anerkannten Vorkommnisse im Inneren eines der Sätze von Tintendaten und/oder eine Information der Identifikation des Satzes von Tintendaten zurücksendet.

20. Computerprogramm (115), umfassend Programmcodeanweisungen zur Ausführung der Schritte des Verfahrens zum Suchen von mindestens einem Begriff in einem in sequentieller Sprache gespeicherten Rohdatensatz, wobei der Begriff in Form eines von einem Benutzer eingegebenen Eingangssignals einer Anfrage vorliegt, gemäß einem der Ansprüche 1 bis 19, wenn das Programm auf einem Computer ausgeführt wird.

21. Computerprogramm gemäß Anspruch 20, bei dem die Programmcodeanweisungen eine Regulärausdruck-Sprache zur Formulierung einer Suchanfrage für eine Reihe von Tintendokumenten aufweisen, die in einem Zwischendatenformat gespeichert sind, **dadurch gekennzeichnet, dass** die Sprache Konvertierungsanweisungen der Anfrage in Form eines Anfrageautomaten umfasst, der während der Ausführung der Schritte des Verfahrens zum Suchen von mindestens einem Begriff in mindestens einem einen Satz von rohen Tintendaten umfassenden Dokument direkt genutzt werden kann.

22. Vorrichtung zum Suchen von mindestens einem Begriff aus mindestens einem Schriftzeichen in mindestens einem Dokument, umfassend einen Satz von Tintendaten, wobei die Tintendaten in Form einer Handschrift verfasst und vorab direkt in dieser Form registriert wurden,
**dadurch gekennzeichnet, dass** sie Mittel des vorherigen Konvertierens der Dokumente oder Daten aus Tinte, bei denen das Suchen und Erkennen der Schrift erfolgen muss, in Zwischendaten, die in einem Zwischenformat in Speichermitteln in Form mindestens eines aus durch Zweige verbundenen Knoten gebildeten Graphen zur Segmentierung gespeichert werden, wobei jeder Knoten mindestens ein Tintensegment umfasst, das mindestens einer Hypothese der Übereinstimmung mit einer Erkennungseinheit zugeordnet ist, wobei jeder Zweig einen ersten Knoten mit einem zweiten Knoten verbindet, um eine Nachbarschaftsbeziehung zwischen mindestens einem in dem ersten Knoten enthaltenen Segment und mindestens einem in dem zweiten Knoten enthaltenen Segment zu definieren,
und Mittel des Suchens des mindestens einen Begriffs umfasst, ausgeführt an den Zwischendaten, wobei die Mittel des Suchens dazu ausgelegt sind, den mindestens einen Begriff zu suchen, indem der mindestens eine Begriff in mindestens einen Anfrageautomaten konvertiert wird, der an das Zwischenformat angepasst ist, um direkt zur Ausführung des Suchens des mindestens einen Begriffs, das an den Zwischendaten ausgeführt wird, und zur Durchführung eines Erkennens der Zwischendaten unter Verwendung des mindestens einen Anfrageautomaten als Sprachmodell genutzt zu werden, wobei das vorherige Konvertieren einmalig während des Speicherns eines der Datensätze durchgeführt wird und das Suchen jederzeit durchgeführt werden kann.

23. Vorrichtung zum Suchen gemäß Anspruch 22, **dadurch gekennzeichnet, dass** sie zu der Gruppe gehört, umfassend mindestens:
- einen Desktop- oder Laptop-Computer,
- einen digitalen numerischen Assistenten,
- einen Notizblock-Computer,
- ein mobiles Telekommunikationsendgerät,
- einen Multimedia-Anschluss,
- einen digitalen Stift.

## Claims

1. A method for searching for at least one term, made up of at least one character, in at least one document comprising a set (101) of handwritten data, the handwritten data being written in the form of a handwritten writing and previously stored directly in this form,
**characterized in that** it comprises a prior conversion operation (100) of the handwritten documents or data (101) in which the search and writing recognition must be done, into intermediate data (102) stored, for example in a database system, in an intermediate format, in the form of at least one segmentation graph made up of nodes connected by branches, each node comprising at least one handwritten segment associated with at least one match hypothesis with a recognition unit, each branch connecting a first node to a second node to define an adjacency relationship between at least one segment contained in said first node and at least one segment contained in said second node,
and an operation (105) for converting said at least one term into at least one request automaton (111) adapted to the intermediate format to be exploited directly to perform an operation (106) for searching for said at least one term, done on said intermediate data, and a recognition operation (114) of the intermediate data by using said at least one request automaton as language model,
said prior conversion operation being done once and for all during the storage of one of said data sets and said search operation being able to be done at any time.

2. The search method according to claim 1, **characterized in that** said conversion operation comprises the following steps:
- dividing said set into at least one handwritten segment, each of said segments being defined by two consecutive adjacent segmentation points;
- building at least one segmentation graph;
- associating each of the nodes of said at least one graph with at least one match hypothesis with a predetermined recognition unit;
- associating at least one confidence score with each of said match hypotheses with a recognition unit, said at least one confidence score indicating a likelihood that said at least one handwritten segment corresponds to said recognition unit;
- classifying said match hypotheses with a recognition unit based on said confidence scores.

3. The search method according to claim 2, **characterized in that** said search operation comprises the following steps:
- obtaining an input request comprising said term to be searched;
- converting the content of said input request into said at least one request automaton adapted to said intermediate format;
- searching for at least one match between said term and at least one element from said intermediate data;
- showing and/or sending at least one search result.

4. The search method according to claim 3, **characterized in that** each confidence score is stored in each corresponding node of said graph, the language model defining at least one path through the nodes, and said operation further comprising said recognition by searching for at least one path having the highest combined likelihood indicated by the stored confidence scores.

5. The search method according to any one of claims 1 to 4,
**characterized in that** said conversion operation comprises a prior operation for normalizing the outline of said characters forming said raw handwritten data, by inspecting and/or correcting at least one of the parameters belonging to the group comprising:
- an incline value, relative to at least one reference direction;
- a rotation coefficient, relative to at least one given axis;
- a line thickness;
- a height and/or a width of the character relative to at least two reference lines,
so as to provide a normalized handwritten data set.

6. The search method according to any one of claims 1 to 5,
**characterized in that** said conversion step comprises a step for weeding out the branches of said segmentation graph whose nodes contain match hypotheses with a recognition unit having a low confidence score.

7. The search method according to any one of claims 2 to 6,
**characterized in that** said classification step has, for each node of said segmentation graph, a list of said match hypotheses of said node with a predetermined recognition unit by order of decreasing confidence score.

8. The search method according to claim 7, **characterized in that** said classification step implements filtering of said likeliest match hypotheses, by comparing said confidence scores with a predetermined threshold value.

9. The search method according to any one of claims 2 to 8,
**characterized in that** said classification operation is based on at least one of the following classification techniques, based on:
- Kohonen neural networks;
- support vector machine;
- core methods;
- fuzzy logic systems;
- hidden Markov models;
- neural networks.

10. The search method according to any one of claims 1 to 9,
**characterized in that** said conversion operation comprises a storage step and stores at least some of the following information:
- a set of said nodes;
- a list of said match hypotheses of each of said nodes with at least one recognition unit;
- a confidence score for each of said confidence hypotheses with a recognition unit, corresponding to each of said nodes;
- a location of each of said nodes in said set of stored raw handwritten data, said location being defined by at least one segmentation point;
- information relative to the fact that a node is adjacent to a space separating two handwritten segments.

11. The search method according to any one of claims 2 to 10,
**characterized in that** said segmentation points are determined according to at least one of the criteria belonging to the group comprising:
- an extreme and/or minimum determined relative to reference lines;
- an inflection point;
- an increasing slope onset;
- a decreasing slope onset;
- a stop point due to an over-elevation of the writing means;
- an attachment point of the writing means;
- crossed lines.

12. The search method according to any one of claims 1 to 11,
**characterized in that** said searched term belongs to the group comprising at least one typed character or handwritten text.

13. The search method according to any one of claims 3 to 12,
**characterized in that** said request automaton is of the type belonging to the group comprising at least one finite-state automaton.

14. The search method according to any one of claims 3 to 12,
**characterized in that** said conversion step into at least one automaton comprises at least:
- a step for dividing the content of the request into recognition units belonging to the group comprising at least:
- syllables;
- phonemes;
- graphemes;
- letters;
- a step for storing each of said recognition units in a state of said request automaton,
such that each state of said request automaton contains a recognition unit of said input request and each branch of said request automaton connecting a first state with a second state defines an ascendance/descendence relationship between said recognition units contained in said first and second states.

15. The search method according to claim 14, **characterized in that** said search operation comprises matching each of said recognition units contained in each of said states of said request automaton with at least one node of said graph, so as to identify the nodes of said graph having the highest match likelihood with said recognition unit.

16. The search method according to claims 14 and 15,
**characterized in that** during said search operation, one progresses simultaneously in said graph and in said request automaton,
such that when matching between a first node of said segmentation graph and a first recognition unit contained in a first state of said request automaton has been able to be done, a second state is selected descending directly from said first state of said request automaton, and a node descending directly from said first node and having the highest match likelihood with said second recognition unit is determined in said graph.

17. The search method according to claim 16, **characterized in that** said matching between said segmentation graph and said request automaton uses a maximum likelihood trellis, comprising said graph from said handwritten segments on the x-axis, and said request automaton on the y-axis.

18. The search method according to any one of claims 16 and 17,
**characterized in that** the path of said graph and said minimum-cost states automaton is determined by calculating the sum of the confidence scores assigned to said nodes of said graph and the transition arcs between said states of said automaton.

19. The search method according to any one of claims 1 to 18,
**characterized in that** said step for displaying and/or sending at least one search result further returns location information for each of the occurrences recognized within one of said sets of handwritten data and/or identification information for said set of handwritten data.

20. A computer program (115) comprising program code instructions for carrying out the steps of the method for searching for at least one term in a set of raw data stored in sequential language, said term assuming the form of an input signal of a request entered by a user, according to any one of claims 1 to 19 when said program is run on a computer.

21. The computer program according to claim 20, wherein the program code instructions include a regular expression language for formulating a search request for a set of handwritten documents stored in an intermediate data format, **characterized in that** said language comprises instructions for converting said request into a request automaton able to be exploited directly during the performance of the steps of the method for searching for at least one term in at least one document comprising a set of raw handwritten data.

22. A device for searching for at least one term, made up of at least one character, in at least one document comprising a set of handwritten data, the handwritten data being written in the form of a handwritten writing and previously stored directly in this form,
**characterized in that** it comprises means for prior conversion operation of the handwritten documents or data in which the search and writing recognition must be done, into intermediate data stored in storage means, in an intermediate format, in the form of at least one segmentation graph made up of nodes connected by branches, each node comprising at least one handwritten segment associated with at least one match hypothesis with a recognition unit, each branch connecting a first node to a second node to define an adjacency relationship between at least one segment contained in said first node and at least one segment contained in said second node,
means for searching for said at least one term, done on said intermediate data, in which said search means are configured to search for said at least one term by converting said at least one term into at least one request automaton adapted to the intermediate format to be exploited directly for the performance of the search for said at least one term done ann the intermediate data, and to perform a recognition of the intermediate data by using said at least one request automaton as language model, said prior conversion operation being done once and for all during the storage of one of said data sets and said search being able to be done at any time.

23. The search device according to claim 22, **characterized in that** it belongs to the group comprising at least:
- a desktop or portable computer;
- a personal digital assistant;
- an electronic tablet;
- a mobile telecommunications terminal;
- a multimedia terminal;
- a digital pen.
